# EUROPÄISCHE PATENTANMELDUNG

(11) **EP 1 593 353 A1**
(43) Veröffentlichungstag der Anmeldung: **09.11.2005**
(21) Anmeldenummer: 05007710.6
(22) Anmeldetag: 08.04.2005
(51) Int. Cl.: A61C 13/00

(54) **Rohling aus Keramik oder Kompositwerkstoff**

(30) Priorität: 05.05.2004 DE 102004022764
(71) Anmelder: Heraeus Kulzer GmbH, 63450 Hanau (DE)
(72) Erfinder: Brämer, Wulf, Dr., 63486 Bruchköbel (DE)
(74) Vertreter: Kühn, Hans-Christian

(57) **Zusammenfassung**

Ein Keramik- oder Composite-Rohling zum Anschluss an mindestens einen Magneten im Spannfutter einer Maschine zur spanabhebenden Bearbeitung trägt an mindestens einer von zwei gegenüberliegenden Seiten ein magnetisches oder magnetisierbares Teil.

## Beschreibung

In der Zahntechnik findet die Herstellung von Zahnersatz mit CAD/CAM-Verfahren immer weitere Verbreitung. Es sind eine Reihe von Verfahren bekannt, welche die computergestützte Herstellung von Zahnersatz betreffen, beispielsweise das Fräsen von Keramikrohlingen nach 3D-Datensätzen (EP 904 743, DE 198 38 238A1, DE 101 07 451A1, CEREC® -System von Sirona, PROCERA®-System von Degussa, LAVA®-System von 3M-Espe). Statt den Keramikrohlingen können als Rohlinge auch fräsbare Composite-Blöcke (bestehend aus Polymer(en) und anorganischem und/oder organischem Füllstoff) eingesetzt werden.

Bei diesen Fräsprozessen wird in der Regel ein Rohling drehbar in eine Maschine zur materialabtragenden Bearbeitung eingespannt (EP 160 797 B1). Dazu werden die Rohlinge mit integriertem Halter geliefert, der das Einspannen ermöglicht. Solche Halter sind z.B. in DE 44 36 231 A1, WO 0245614, EP 455 854 B1 oder EP 982 009 A2 beschrieben. Nach Gebrauch werden die Halter in der Regel verworfen. Das bedeutet Materialverschwendung der relativ teuren und aufwendig herzustellenden Keramik- oder Composite-Materialien und demzufolge höhere Kosten.

Es wurde nun eine Vorrichtung entwickelt, die in überraschend einfacher Weise dieses Problem beseitigt.

Die Erfindung betrifft Keramik- oder Composite-Rohlinge mit mindestens einem magnetischen oder magnetisierbaren seitlich angebrachten Teil, das mit mindestens einem Magneten im Spannfutter der Maschine korrespondiert. Dabei ist ein planer Formschluss in der Regel ausreichend, es kann aber auch ein strukturierter Formschluss sein, der zusätzlichen Halt bieten würde. Vorzugsweise werden am Rohling zwei gegenüberliegende Ausnehmungen vorgesehen, in die ein z.B Eisen- oder Stahlteil passgenau eingeführt wird. Das Teil braucht nur so fixiert zu werden, dass es bei der Handhabung nicht verlorengeht. Einmal eingespannt, wird es durch den Druck gehalten. Zum Einspannen besitzt die Fräsmaschine eine magnetische Vorrichtung, in der Regel ein Platte, an der das Metallteil des Rohlings angebracht wird.

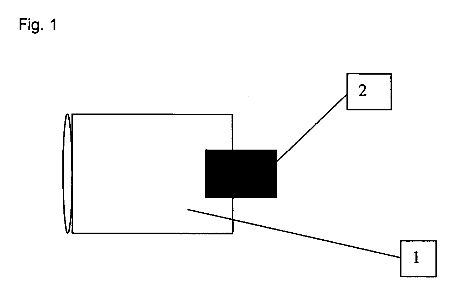

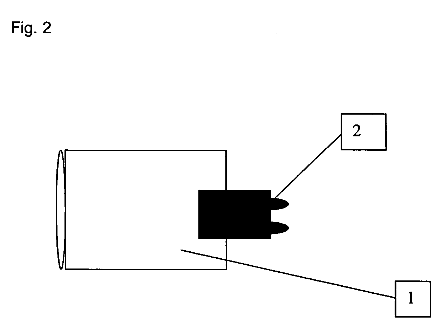

In der Figur 1 ist ein zylinderförmiger Rohling 1 skizziert, wobei das magnetische Teil 2 an der einzuspannenden Achse angeordnet ist. Figur 2 zeigt einen entsprechenden Rohling mit strukturiertem Teil 2.

## Patentansprüche

1. Keramik- oder Composite-Rohling zum Anschluss an mindestens einen Magneten im Spannfutter einer Maschine zur materialabtragenden Bearbeitung, **dadurch gekennzeichnet, dass** er an mindestens einer von zwei gegenüberliegenden Seiten ein magnetisches oder magnetisierbares Teil trägt.

2. Rohling nach Anspruch 1, **dadurch gekennzeichnet, dass** das Teil zumindest teilweise in den Rohling eingelassen ist,

3. Rohling nach Anspruch 1, **dadurch gekennzeichnet, dass** das Teil ein Zylinder oder Quader ist.

4. Rohling nach Anspruch 1, **dadurch gekennzeichnet, dass** das Teil aus Eisen oder Stahl ist.

5. Rohling nach Anspruch 1, **dadurch gekennzeichnet, dass** das Teil an der dem Spannfutter zugewandten Seite plan ist.

6. Rohling nach Anspruch 1, **dadurch gekennzeichnet, dass** das Teil an der dem Spannfutter zugewandten Seite strukturiert ist.
